(19) Europäisches Patentamt
European Patent Office
Office européen des brevets

(11) Publication number: **0 020 183**
**B1**

(12) # EUROPEAN PATENT SPECIFICATION

(45) Date of publication of patent specification: 27.07.83

(51) Int. Cl.³: C 08 B 37/08, C 08 J 5/00

(21) Application number: 80301883.7

(22) Date of filing: 05.06.80

(54) **Poly-ion complex, process for its preparation and shaped articles prepared therefrom.**

(30) Priority: 05.06.79 JP 70463/79
05.06.79 JP 70464/79
05.06.79 JP 70465/79
05.06.79 JP 70466/79

(43) Date of publication of application:
10.12.80 Bulletin 80/25

(45) Publication of the grant of the patent:
27.07.83 Bulletin 83/30

(84) Designated Contracting States:
DE FR GB NL SE

(56) References cited:
CHEMICAL ABSTRACTS, vol. 88, 1978, abstract 184937g, Columbus, Ohio, USA HIRANO, S. et al. "Formation of the polyelectrolyte complexes of some acidic glycosaminoglycans with partially N-acylated chitosans"

PATENTS ABSTRACTS OF JAPAN, vol. 3, no. 55, May 11, 1979, page 141 C 45

DIE MAKROMOLEKULARE CHEMIE, vol. 180, no. 6, June 1, 1979, HIROSHI FUKUDA "Polaelectrolyte complexes of sodium carboxymethyl-cellulose with chitosan" pages 1631—1633

(73) Proprietor: KUREHA KAGAKU KOGYO KABUSHIKI KAISHA
9-11 Horidome-cho 1-chome Nihonbashi Chuo-ku
Tokyo (JP)

(72) Inventor: Koshugi, Junichi
No. 22 Daiichi-Kurehasoh 3-10-13 Nerima
Nerima-ku
Tokyo (JP)
Inventor: Seguchi, Koji
687-19 Oaza-Miyawada Fujishiro-cho
Kita-Sohma-gun Ibaraki-ken (JP)

(74) Representative: Myerscough, Philip Boyd et al,
J.A.Kemp & Co. 14, South Square Gray's Inn
London, WC1R 5EU (GB)

(56) References cited:
DIE MAKROMOLEKULARE CHEMIE, vol. 175, 1974 YASUO KIKUCHI "Polyelectrolyte complex of heparin with chitosan", pages 2209—2211

DIE MAKROMOLEKULARE CHEMIE, vol. 175, no. 12, December 1974 YASUO KIKUCHI "Polyelectrolyte complex of sodium dextran sulfate with chitosan", pages 3593—3596

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 020 183 B1

# Poly-ion complex, process for its preparation and shaped articles prepared therefrom

The present invention relates to poly-ion complexes, to their preparation and to shaped articles prepared therefrom. A poly-ion complex is referred to herein as PC for brevity.

A PC is a complex compound obtained by reacting in a suitable solvent a positively-charged polyelectrolyte with a negatively-charged polyelectrolyte, a positively-charged polyelectrolyte with an amphoteric polyelectrolyte, or a negatively-charged polyelectrolyte with an amphoteric polyelectrolyte. The reaction is very interesting as a model for reactions in living bodies, such as between a polysaccharide and a protein. Recently, PC's obtained utilizing such reactions have attracted attention as materials for use in medical treatment or in living bodies, for instance, as a dialysis membrane or a filter material for use in ultrafiltration. In cases where the PC is used in living bodies, the components of the PC or the PC itself must be compatible with, non-toxic to and stable as regards the living body.

Chitin, and N-acylchitosans generally, are chemically stable within and safe to the living body. However, since chitin is highly crystalline and the bonding of its aminoacetyl groups to its pyranose rings is strong, no solvent is available which dissolves, disperses or swells chitin so favorably as for cellulose. Solvents such as dichloroacetic acid, sulfuric acid and formic acid have been proposed for chitin and N-acylchitosans, but these cause a reduction in the molecular weight of the chitin or N-acylchitosan by decomposing it, and suffer from handling problems such as the treatment of waste liquor. Accordingly, in order to convert chitin into a soluble derivative in safer solvents, trials have been carried out such as the alkylation or deacetylation of chitin. For instance, deacetylated chitin, i.e. chitosan, and its derivatives have been proposed. PC's using chitin as a starting material include the PC of chitosan and a sulfonated polyvinyl alcohol (Japanese Patent Application Laid Open No. 8879/75) and the PC of chitosan and sulfonated cellulose (Japanese Patent Application Laid Open No. 123,179/75).

Chemical Abstracts, volume 88, 1978, 184937g reports the interactions of chondroitin sulfate A, chondroitin sulfate C and heparin with partially N-acylated chitosans in aqueous acidic solutions of pH 2.8 and 4.5 to form complexes. The interaction was examined as a function of the degree of substitution and the structure of the N-acyl group.

The present invention provides a poly-ion complex comprising a carboxymethyl N-acylchitosan having a degree of carboxymethylation of from 0.1 to 1 per pyranose unit or a de-N-acylated carboxymethyl N-acylchitosan having a degree of carboxymethylation of from 0.1 to 1 per pyranose unit and a degree of de-N-acylation of from 0.1 to 1 per pyranose unit; and a polyelectrolyte.

As will readily be appreciated, chitin is a N-acylchitosan where acyl is acetyl and the degree of acetylation is 1.0 per pyranose unit.

PC's according to the invention are very soluble in aqueous solvents at an appropriate pH and can be readily processed.

Carboxymethyl N-acylchitosan, including carboxymethyl chitin, and their salts are soluble in aqueous alkaline solutions. De-N-acylated carboxymethyl N-acylchitosans, including de-N-acetylated carboxymethyl chitin, and their salts are soluble in aqueous acidic or alkaline solutions and also in aqueous solutions of a neutral salt at a moderately high concentration. The deacylated derivatives are amphoteric having both carboxyl and amino groups. The PC's of the present invention can therefore be prepared by combining a carboxymethyl N-acylchitosan having a degree of carboxymethylation of from 0.1 to 1 per pyranose unit or a de-N-acylated carboxymethylation of from 0.1 to 1 per pyranose unit and a degree of de-N-acylation of from 0.1 to 1 per pyranose unit, or a salt thereof, with a polyelectrolyte in an aqueous solution.

Carboxymethylchitin and deacetylated derivatives of carboxymethylchitin for use in the present invention are obtainable, for instance, as follows.

Chitin is represented by the general formula (I) below. It may be obtained from shells of crustaceans such as crabs and lobsters and purified by conventional methods. It may then be reacted with monochloroacetic acid to be carboxymethylated to carboxymethylchitin or its salt represented by the general formula (II):

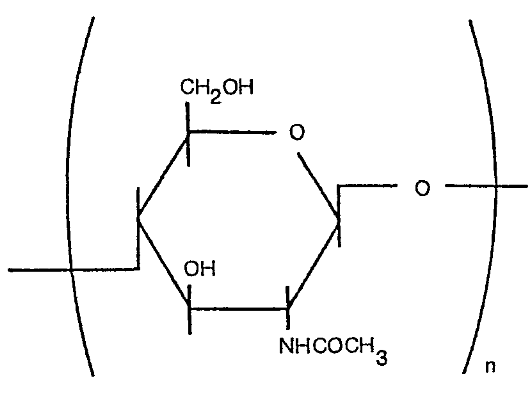

(I)

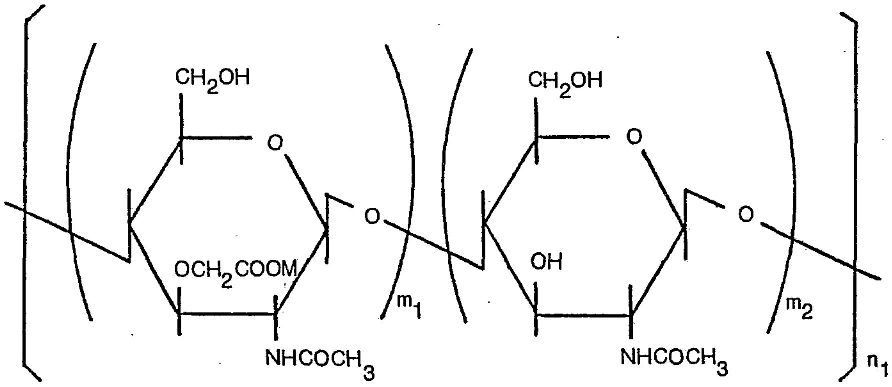

(II)

or

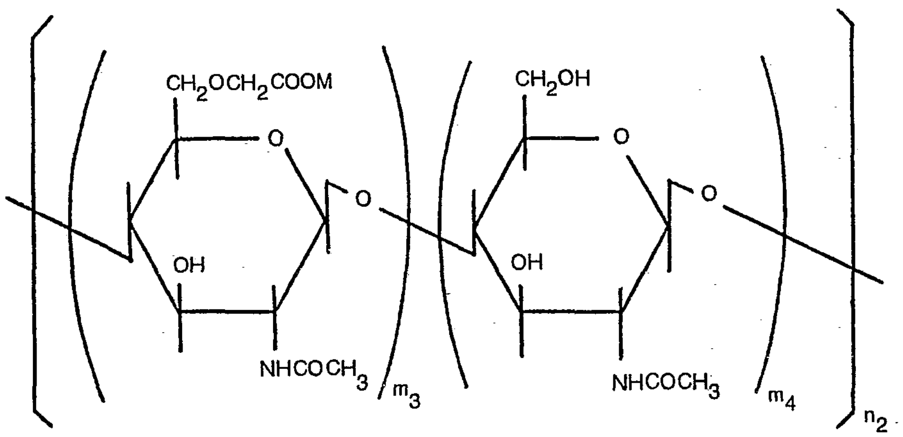

(II)

wherein

M represents a hydrogen atom, alkali metal cation, alkaline earth metal or ammonium group; $m_1$, $m_3$, n, $n_1$ and $n_2$ represent a positive integer; and $m_2$ and $m_4$ represent zero or a positive integer.

The degree of carboxymethylation, per pyranose structural unit, of a carboxymethylchitin or salt thereof used in the present invention may be from 0.1 to 1.0, preferably 0.3 to 1.0. To obtain a deacetylated derivative, the carboxymethylchitin or its salt is heated in an aqeous alkaline solution, for instance, sodium hydroxide or potassium hydroxide. Deacetylation occurs and an amphoteric polyelectrolyte i.e. deacetylated carboxymethylchitin or its salt, is obtained in an aqueous solvent. The degree of deacetylation can be from 0.1 to 1.0, preferably from 0.3 to 1.0 per pyranose unit. One method of producing a deacetylated product of carboxymethylchitin is to treat the carboxymethylchitin with an aqueous alkali solution, preferably of a normality of 4 to 15. It is preferred to carry out the reaction at a temperature of 65 to 150°C, more preferably 65 to 110°C, for 0.1 to 48 hours. This method is described in European Application No. 79303066.9 (Specification No. 0,013,512).

In carboxymethyl N-acylchitosans or their salts for use in the present invention, the degree of carboxymethylation per pyranose structural unit may be from 0.1 to 1.0, preferably from 0.3 to 1.0. To obtain a deacylated derivative, the carboxymethyl N-acylchitosan or its salt is heated in an aqueous alkaline solution, for instance, sodium hydroxide or potassium hydroxide. Deacylation occurs and an amphoteric polyelectrolyte, i.e. de-N-acylated carboxymethyl N-acylchitosan or its salt, is obtained in an aqueous solvent. The degree of de-N-acylation can be from 0.1 to 1.0, preferably from 0.3 to 1.0, per pyranose unit.

The typical units of carboxymethylchitin, deacetylated carboxymethylchitin, carboxymethyl N-acylchitosan and de-N-acylated carboxymethyl N-acylchitosan are exemplified as follows by using simplified structural formulae:

(A) anionic unit of construction:

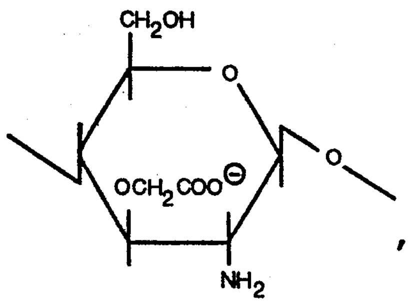
,
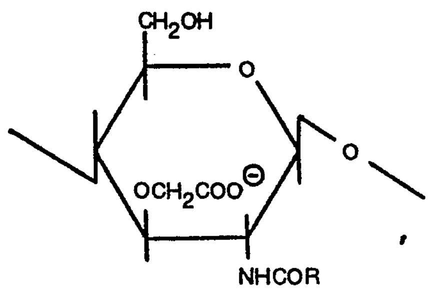
,

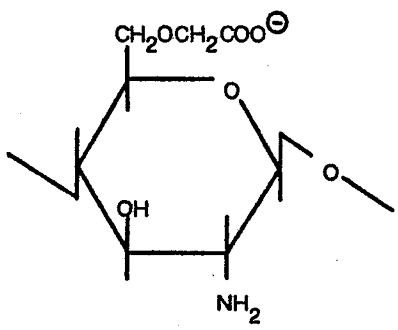
and
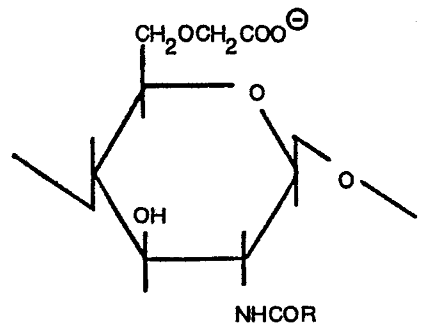

(B) cationic unit of construction:

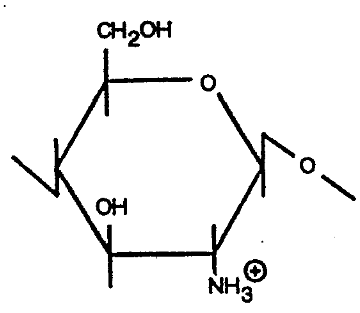
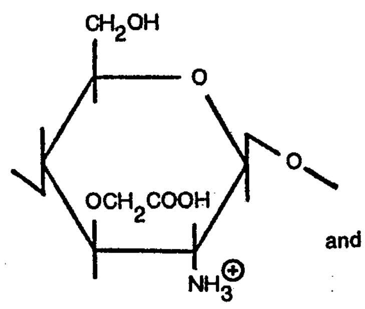
and
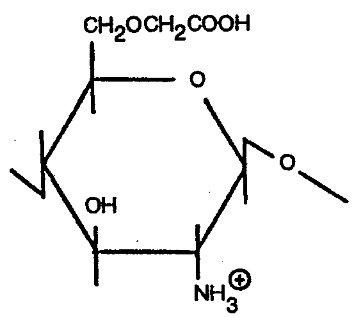

(c) neutral unit of construction:

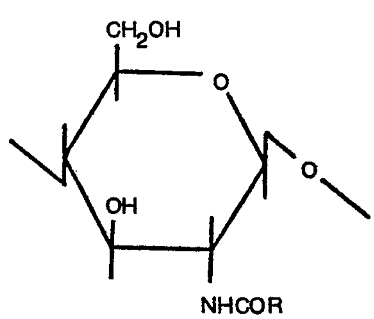

wherein

R represents alkyl having 1 to 12 carbon atoms.

It is difficult to indicate the structure of a PC of the present invention clearly. However, it is presumed that the PC has a three dimensional structural network held together by electrostatic bonding, for example, between $—NH_3^{\oplus}$ of de-N-acylated carboxymethyl N-acylchitosan and an anionic group of a polyelectrolyte or between $—COO^{\ominus}$ of de-N-acylated carboxymethyl N-acylchitosan and a cationic group of a polyelectrolyte.

Polyelectrolytes which are preferably used in the present invention can be divided into the following four groups:

(1) Water-soluble chitosan derivative, for instance, chitosan, glycol-chitosan, O—1,2-dihydroxypropylchitosan N-methylglycol-chitosan, etc., those having amino group(s).

(2) Water-soluble sulfated chitin or chitosan derivatives, for instance anionic derivatives such as O-sulfated chitin, N-sulfated chitosan or N-sulfated glycol-chitosan, or O- and N-sulfated chitosan and glycol chitosan, for instance, chitosan sulfuric acid ester chitin sulfuric acid ester and glycol-chitosan sulfuric acid ester.

(3) A group consisting of dextran sulfate, heparin and chondroitin sulfuric acid (chondroitin sulfate).

(4) Anionic-or cationic water-soluble polymers, for example anionic polymers, such as polystyrenesulfonate, polyethylenesulfonate, partially sulfated polyvinyl alcohol, polyacrylate, polymethacrylate and poly-L-glutamate; and cationic polymers, such as poly-L-lysine, polyethyleneimine, polyvinylpyridine, polyvinylbenzyltrimethylammonium salt and polydiallyldimethylammonium salt.

The ionic polyelectrolyes used in the present invention are soluble in aqueous solvents. Accordingly, the PC's of the present invention can easily be produced without using an organic solvent by dissolving, for example, carboxymethyl N-acylchitosan, de-N-acylated carboxymethyl N-acylchitosan or a salt thereof in an aqueous solvent, adding a solution of cationic- or anionic polyelectrolyte under stirring and then separating and washing the thus-formed PC with water.

The aqueous solvent for use in this reaction is an aqueous acidic or alkaline solution. The concentration of the acid or alkali solute can be selected as desired. However, bearing in mind the viscosity of the solution, the concentration is usually 0.1 to 5% by weight. Care should be taken to avoid the formation of a non-uniform PC or of a gel-like PC by not making the viscosity too high. The reaction temperature is preferably below 100°C, because of the water solvent, and more preferably is in the vicinity of room temperature (20°C).

It is possible to confirm the formation of a PC by elementary analysis, infrared spectroscopy or a solubility test. The limiting viscosity ($n_{sp}/c$) at a temperature of 20°C (determined by the Ubbelohde viscometer) of the PC of the present invention is 0.1 to 20.

A PC according to the present invention is soluble in an aqueous solution of pH at which the partner of the carboxymethyl N-acylchitosan, de-N-acylated carboxymethyl N-acylchitosan or salt thereof is soluble and also is soluble in an aqueous solution of a neutral salt. For instance, it is soluble in an aqueous solution of sodium chloride, potassium chloride, calcium chloride, magnesium chloride or ammonium chloride, or of a sodium, potassium, magnesium or ammonium salt of an organic acid such as acetic- adipic-, propionic-, mandelic-, salicylic- and succinic acid. As a result, a PC according to the invention can be easily processed.

Accordingly, after dissolving a PC of the present invention in one of the above-mentioned solutions and shaping it into a film of fibers, insolubilization can easily be carried out by a desalting treatment. Also, the electrodeposition method of G.B. Patent No. 1,153,551 may be used for preparation of a shaped article from a solution of the PC. In this case, deacetylated carboxymethylchitin or de-N-acylated carboxymethyl N-acylchitosan is very usable owing to their amphoteric nature. In either an acidic or basic aqueous solution, a shaped material can be obtained by electrophoresis. Insolubilization may be completed by thermal teratment, or treatment by ultraviolet rays or a crosslinking agent.

The shaped articles of the present invention can possess excellent resistance to chemicals and to heat and because they are based on a N-acylchitosan derivative (including chitin derivatives), they are stable within the living bodies. Since the articles have ionic groups, they are utilizable as a material for microcapsules, for edible casings or for membranes for use in dialysis and ultrafiltration in artificial organs and for surgical operation, for membranes as separators in accumulators, for membranes of fuel cells, a plastics material regulating humidity and a coating material for electroconductivity or for preventing electric charging.

The following Examples illustrate the present invention:

## Example 1

A solution designated A-liquid was prepared by dissolving $1.6 \times 10^{-2}$ Kg (16 g) of a commercial chitosan into $2 \times 10^{-3}m^3$ (2 liters) of an aqueous 1% by weight acetic acid solution. Another solution designated B-liquid was prepared by dissolving $2.8 \times 10^{-2}$ Kg (28 g) of the sodium salt of deacetylated carboxymethylchitin (degree of carboxymethylation of 1.0, degree of deacetylation of 0.3 and limiting viscosity of 9.5) in $2 \times 10^{-3}m^3$ (2 liters) of water. Into $2 \times 10^{-3}m^3$ (2 liters) of B-liquid, $4 \times 10^{-4}m^3$ (400 ml) of A-liquid was added while stirring. A white cloudy substance appeared in the mixture, which precipitated. After stirring the mixture for one more hour, the precipitate was separated by centrifugation to obtain a white precipitate (I).

To the resultant clear filtrate, $4 \times 10^{-4}m^3$ (400 ml) of A-liquid was added under agitation to form another white precipitate. After leaving the mixture for one hour, the precipitate was separated by centrifugation to obtain another white precipitate (II). The same procedures were repeated to obtain a

series of white precipitates of (III), (IV) and (V). Each precipitate was washed with water, then with ethanol, and dried. The weights and the results of elementary analyses of precipitates (I) to (V) are shown in Table 1.

TABLE 1

| Specimen | Weight kg(g) | Analytical composition (%) C | H | O | N |
|---|---|---|---|---|---|
| Precipitate (I) | $7.5 \times 10^{-3}$ (7.5) | 45.2 | 6.2 | 41.8 | 6.8 |
| Precipitate (II) | $7.6 \times 10^{-3}$ (7.6) | 45.0 | 6.3 | 41.8 | 6.9 |
| Precipitate (III) | $7.7 \times 10^{-3}$ (7.7) | 45.1 | 6.5 | 41.1 | 7.0 |
| Precipitate (IV) | $8.0 \times 10^{-3}$ (8.0) | 45.3 | 6.5 | 41.1 | 7.1 |
| Precipitate (V) | $8.1 \times 10^{-3}$ (8.1) | 45.1 | 6.5 | 41.2 | 7.2 |
| Deacetylated carboxymethylchitin (starting material) | | 45.0 | 6.0 | 43.5 | 5.5 |
| Chitosan (starting material) | | 45.0 | 6.8 | 39.5 | 8.7 |

Table 1 also shows the elementary analytical data of the deacetylated carboxymethylchitin and chitosan used in Example 1.

As is seen in Table 1, the elementary analytical data of the precipitate shows a favorable coincidence with the calculated data for a 1:1 mixture of the deacetylated carboxymethylchitin and chitosan (C:45.0 H:6.4, O:41.5 and N:7.1) from the elementary analytical data of the two compounds.

The precipitates (I) to (V) are soluble in an aqueous 7% by weight sodium acetate solution, and showed an infrared absorption band in the vicinity of 1510 $cm^{-1}$ attributable to $-NH_3^{\oplus}$ and an infrared absorption band in the vicinity of 1710 $cm^{-1}$ attributable to $-COO^{\ominus}$. From this information, it was concluded that the precipitate is the PC with cross-linked net-work structure by ion bonding. Total yield of the precipitate was $3.89 \times 10^{-2}$ kg (38.9 G), 95% of theoretical.

## Example 2

A solution of $5 \times 10^{-3}$ kg (5 g) of the PC obtained in Example 1 dissolved in $2 \times 10^{-4} m^3$ (200 ml) of an aqueous 7% by weight sodium acetate was poured onto a glass plate and after evaporating off $10^{-4} m^3$ (100 ml) of water at a temperature of 40°C, the plate was immersed in a 4:1 mixture of ethanol and water to remove sodium acetate. After removing the solvent at a temperature of 70°C, a clear film was obtained.

The strength of the thus-obtained film was determined after controlling the moisture content for 2 days at a temperature of 30°C and relative humidity of 60%. The results are as follows:

Tensile strength: $3 \times 10^6$ $kg/m^2$ (300 $kg/cm^2$) at elongation of 12%
Young's modulus $2.8 \times 10^8$ $kg/m^2$ (28,000 $kg/cm^2$

The limiting viscosity of the product in an aqueous 0.1N sodium acetate solution at 20°C is 10.8.

## Example 3

A solution prepared by dissolving $1.6 \times 10^{-2}$ kg (16 g) of commercial chitosan into $2 \times 10^{-3} m^3$ (2 liters) of an aqueous 1% by weight acetic acid was designated A-liquid. Another solution prepared by dissolving $2.9 \times 10^{-2}$ kg (29 g) of the sodium salt of carboxymethylchitin having degree of carboxymethylation of 1.0 and limiting viscosity of 11.0 in $2 \times 10^{-3} m^3$ (2 liters) of water was designated B-liquid. Upon addition of A-liquid to B-liquid under agitation, the mixture became turbid and a precipitate appeared. After separating the precipitate by filtration and washing with water and then with ethanol, the precipitate was dried to give $4.2 \times 10^{-2}$ kg (42 g) of a white powder at a yield of about 100%. The elementary analysis of the powder gave a nitrogen content of 6.7%.

Infrared absorption spectroscopy of the thus-obtained product revealed two absorption bands at 1710 $cm^{-1}$ and 1500 $cm^{-1}$ respectively, the former being attributed to carbonyl group and the latter being attributed to $-NH_3^{\oplus}$. From these findings, formation of the PC was confirmed.

Example 4

To a solution prepared by dissolving 2.7 × $10^{-2}$ kg (27 g) of the sodium salt of carboxymethyl chitin having a degree of carboxylation of 0.8 and a limiting viscosity of 11.5 in 2 × $10^{-3}m^3$ (2 liters) of water, a solution prepared by dissolving 2 × $10^{-2}$ kg (20 g) of glycol-chitosan in $10^{-3}m^3$ (one liter) of an aqueous 1% acetic acid solution was added while stirring. The mixture became turbid and a white precipitate appeared. By the same procedures as in Example 2, a white powder was obtained in an amount of 4.4 × $10^{-2}$ kg (44 g) at a yield of about 100%. The elementary analysis of the thus obtained powder gave a nitrogen content of 6.2%. Infrared absorption spectroscopy of the powder revealed two absorption bands, in the vicinity of 1710 and 1500 $cm^{-1}$ respectively, the former being attributed to carbonyl group and the latter being attributed to —$NH_3^{\oplus}$. From these findings, it was confirmed that the powdery product was a PC comprising glycolchitosan and carboxymethylchitin at a ratio of 1:1.

Example 5

A solution prepared by dissolving 3.7 × $10^{-2}$ kg (37 g) of N-methylglycol-chitosan iodide salt in $10^{-3}m^3$ (one liter) of an aqueous 1% acetic acid was added to a solution prepared by dissolving 2.9 × $10^{-2}$ kg (29 g) of the sodium salt of carboxymethylchitin of a degree of carboxymethylation of 1.0 and of a limiting viscosity of 11.0 in 2 × $10^{-3}m^3$ (2 liters) of water under agitation. The mixture became turbid and a white precipitate appeared. By the same procedures as in Example 3, a white powder was obtained in an amount of 4.5 × $10^{-2}$ kg (45 g) at a yield of about 100%. Elementary analysis of the thus-obtained powder gave a nitrogen content of 5.5%. From the results of infrared absorption spectroscopy of the powder, it was confirmed that the product was a PC of a composition of 1:1 of N-methylglycol-chitosan and carboxymethylchitin.

Example 6

A solution prepared by dissolving $10^{-2}$ kg (10 g) of the PC obtained in Example 3 in 2 × $10^{-4}m^3$ (200 ml) of an aqueous 8% ammonium acetate was cast to to a glass plate, and dried at a temperature of 40°C. The dried matter was washed with water and again dried to form a transparent film. The mechanical properties of the thus-obtained film are shown in the Table below. The pliability of the film depends on relative humidity, and when the relative humidity is higher, the film becomes softer and gives larger elongation.

Table

| | | | |
|---|---|---|---|
| Tensile strength | dry | 4.2 × $10^6$kg/$m^2$ | (420 kg/$cm^2$) |
| | wet | 5.0 × $10^5$kg/$m^2$ | (50 kg/$cm^2$) |
| Elongation | dry | | 2.0% |
| | wet | | 25% |

The limiting viscosity of the product was 14.5 at 20°C in an aqueous 0.1N ammonium acetate solution.

Example 7

A solution prepared by dissolving $10^{-2}$ kg (10 g) of the PC obtained in Example 4 in 2.5 × $10^{-4}m^3$ (250 ml) of an aqueous 10% ammonia solution was cast onto a glass plate and was dried at a temperature of 40°C to form a transparent film. Some of the mechanical properties of the thus-prepared film are shown in the following table:

Table

| | | | |
|---|---|---|---|
| Tensile strength | dry | 3.5 × $10^6$kg/$m^2$ | (350 kg/$cm^2$ |
| | wet | 3.0 × $10^5$kg/$m^2$ | (30 kg/$cm^2$) |
| Elongation | dry | | 2.5% |
| | wet | | 30% |

The limiting viscosity of the product was 12.7 at 20°C in an aqueous 0.1N sodium hydroxide solution.

Example 8

A solution prepared by dissolving $3.65 \times 10^{-2}$ kg (36.5 g) of the sodium salt of N-, O-, sulfated chitosan (of limiting viscosity of 1.2) in $2 \times 10^{-3} m^3$ (2 liters) of water is designated A-liquid. This solution is added to another solution prepared by dissolving in $2 \times 10^{-3} m^3$ (2 liters of water $2.15 \times 10^{-2}$ kg (21.5 g) of carboxymethyl chitosan hydrochloride of a degree of carboxymethylation of 0.3, of a degree of de-acetylation of 1.0 and of a limiting viscosity of 8.0 and showing a blue colour by the addition of toluidine blue indicator, under agitation. The colour of the mixture changed to purplish red and a precipitate appeared. After separating the precipitate by filtration, washing with water and drying the washed precipitate, $4.5 \times 10^{-2}$ kg (45.0 g) of a white powder was obtained at a yield of 90.5%. The elementary analytical data of the thus-obtained powder are shown in Table 2. As is seen in Table 2, the analytical data resembles to the values of elementary composition of a 1:2 mixture of N-, O-sulfated chitosan and carboxymethylchitosan.

TABLE 2

| | Analytical composition (%) | | | | |
|---|---|---|---|---|---|
| | C | H | N | O | S |
| Produced precipitate | 37.2 | 5.5 | 6.6 | 43.9 | 6.8 |
| Chitosan sulfate ester | 22.6 | 2.7 | 4.4 | 50.2 | 20.1 |
| Deacetylated carboxymethylchitin | 44.4 | 6.5 | 7.8 | 41.3 | 0 |

Since the product shows the three infrared absorption bands at 1510 $cm^{-1}$, 1210 $cm^{-1}$ and 1040 $cm^{-1}$ respectively, the first being attributed to $—NH_3^{\oplus}$ and the second and third being attributed to $—SO_3^{\ominus}$, and considering the above elementary analytical data, it was concluded that the precipitate was a PC.

Example 9

$5 \times 10^{-3}$ kg (Five grams) of the PC obtained in Example 8 was dissolved in $2 \times 10^{-4} m^3$ (200 ml) of an aqueous 5% ammonia solution, and the solution was cast onto a glass plate. After removing ammonia and water at a temperature of 40°C from the solution on the plate, a transparent film was obtained. The mechanical pliability of the film depended on its moisture content, the film becoming soft and pliable when wet as is shown in Table 3.

TABLE 3

| | | dry |
|---|---|---|
| Tensile strength | $2.5 \times 10^6$ kg/$m^2$ | (250 kg/$cm^2$) |
| Elongation | | 1.5% |
| | | wet |
| Tensile strength | $5 \times 10^5$ kg/$m^2$ | (50 kg/$cm^2$) |
| Elongation | | 10% |

The limiting viscosity of the product was 9.4 at 20°C in aqueous 0.1N sodium hydroxide solution.

Example 10

An aqueous solution was prepared by dissolving $3.8 \times 10^{-2}$ kg (38 g) of a commercial sodium dextran sulfate of molecular weight of 500,000 and of sulfur content of 18.8% in $1 \times 10^{-3} m^3$ (one liter) of water. This solution was slowly added under agitation to another solution prepared by dissolving $2.3 \times 10^{-2}$ kg (23 g) of the sodium salt of deacetylated carboxymethylchitin (a degree of carboxymethylation of 0.5 and a degree of de-acetylation of 1.0 with limiting viscosity of 8.5) in $2 \times 10^{-3} m^3$ (2 liters) of water. The mixture became turbid and a white precipitate appeared. After separating the precipitate by filtration and washing it with watrer and then with ethanol, the precipitate was dried to obtain $5.1 \times 10^{-2}$ kg (51 g) of a white solid, the yield being nearly 100%. In its infrared absorption spectrogram, a band at 1510 $cm^{-1}$ attributable to $—NH_3^{\oplus}$ and two bands, respectively at 1210 and 1040 $cm^{-1}$ attributable to $—SO_3^{\ominus}$ were observed, and its sulfur content was 12.0% by

elemental analysis. From this information, it was recognized that the product was a 1:1 PC. The limiting viscosity of the PC was 14.5 in an aqueous 0.1N sodium hydroxide solution at 20°C.

Example 11

The same procedures were carried out as in Example 10 except that 4.6 x $10^{-2}$ kg (46 g) of the sodium salt of de-acetylated carboxymethylchitin was used instead of 2.3 x $10^{-2}$ kg (23 g) of the salt. The yield of 6.9 x $10^{-2}$ kg (69 g) was nearly 100%. The same infrared absorption bands were observed, however with larger absorption intensity. The elementary analytical value of sulfur of the product was 9.0%. From this data, it was deduced that the product was a 1:2 PC of dextran deacetylated product carboxymethylchitin. The limiting viscosity of the product was 13.2 at 20°C in an aqueous 0.1N sodium hydroxide solution.

Example 12

An aqueous solution prepared by dissolving 1.5 x $10^{-2}$ kg (15 g) of the sodium salt of delauroylated carboxymethyl N-lauroylchitosan of a degree of carboxymethylation of 0.3, a degree of delauroylation of 0.8 and of a limiting viscosity of 8.5 in 5 x $10^{-4}m^3$ (500 ml) of water was cast onto a glass plate and dried at a temperature of 40°C to form a film. On immersing the dried film into 2 x $10^{-4}m^3$ (200 ml) of an aqueous solution of 1% sodium heparin at 37°C, the surfaces of the film became turbid and the film was insolubilized. After washing the film with water and drying, a transparent film was obtained having the following properties:

| | | | |
|---|---|---|---|
| Tensile strength | dry | 2.2 x $10^6$ kg/m$^2$ | (220 kg/cm$^2$) |
| | wet | 2 x $10^5$ kg/m$^2$ | (20 kg/cm$^2$) |
| Elongation | dry | | 1.5% |
| | wet | | 13.0% |

Example 13

$10^{-2}$ kg (Ten grams) of the PC obtained in Example 10 was dissolved in 2 x $10^{-4}m^3$ (200 ml)of an aqueous 5% ammonia solution. This solution was cast onto a glass plate. By removing ammonia and water from the solution on the glass plate at a temperature of 40°C, a transparent film was obtained.

Example 14

An aqueous solution prepared by dissolving 9 $10^{-3}$ kg (9 g) of the sodium salt of depropionylated carboxymethyl N-propionylchitosan of a degree of carboxymethylation of 0.3 and a degree depropionylation of 0.9 in 5 x $10^{-4}m^3$ (500 ml) of water was brought into reaction with $10^{-4}m^3$ (100 ml) of an aqueous 1% glutraldehyde solution at a temperature of 5°C for 10 min. The reaction mixture was then cast onto a glass plate and dried at 40°C.

On immersing the thus-obtained film into $10^{-4}m^3$ (100 ml) of an aqueous 1% sodium heparin at room temperature, the surfaces of the film became turbid with the formation of poly-ion complex. By washing the turbid and opaque film with water and drying at a temperature of 110°C under atmospheric pressure for 2 hours, a transparent film was obtained.

Example 15

An aqueous solution prepared by dissolving $10^{-2}$ kg (10 g) of poly sodium acrylate in $10^{-2}m^3$ (10 liters) of water was admixed with another aqueous solution prepared by dissolving 2.5 x $10^{-2}$ kg (25 g) of deacetylated carboxymethylchitin of a degree of carboxymethylation of 0.4, a degree of de-acetylation of 1.0 and a limiting viscosity of 7.9 in $10^{-3}m^3$ (one liter) of an aqueous 1% acetic acid solution under agitation. The mixture became turbid and a precipitate appeared. On separating the precipitate by filtration, washing with water and ethanol and then drying, 2.5 x $10^{-2}$ kg (25 g) of a white powdery product was obtained at a yield of about 90%. From the infrared absorption spectroscopic data showing the reduction of the intensities of the bands at 1190 and 1210 $cm^{-1}$ based on the stretching vibration of C—O of a carboxyl group, the relative increase of the intensity of the band at 1200 $cm^{-1}$ based on the stretching vibration of a dissociated carboxyl group and the presence of the bands at 1710 and 1510 $cm^{-1}$, based respectively on a carbonyl group and on $—NH_3^{\oplus}$, the formation of a poly-ion complex was confirmed. The elementary analytical data of the product is shown in Table 4 as well as that of the raw materials.

TABLE 4

| Specimen | Analytical composition (found (wt%)) | | | |
|---|---|---|---|---|
| | C | H | O | N |
| Product | 47.7 | 6.0 | 43.3 | 3.0 |
| Deacetylated carboxy-methylchitin | 44.0 | 6.5 | 42.0 | 7.5 |
| Poly(acrylic acid) | 50.0 | 5.6 | 44.0 | 0.0 |

The limiting viscosity of the product was 9.0 at 20°C in an aqueous 0.1N sodium hydroxide solution.

Example 16

An aqueous solution prepared by dissolving $1.5 \times 10^{-2}$ kg (15 g) of an aqueous 30% commercial polyethyleneimine of an average molecular weight of 4 to $5 \times 10^4$ in $5 \times 10^{-4} m^3$ (500 ml) of water was admixed with another aqueous solution prepared by dissolving $2.8 \times 10^{-2}$ kg (28 g) of the sodium salt of de-acetylated carboxymethylchitin of a degree of carboxymethylation of 1.0, a degree of de-acetylation of 0.3 and a limiting viscosity of 9.5 in $10^{-3} m^3$ (one liter) of water under agitation. The mixture became turbid and a precipitate appeared. By carrying out the same procedures on the precipitate as in Example 15, $2.6 \times 10^{-2}$ kg (26 g) of a white powdery substance was obtained at a yield of 85%.

The product gave an infrared absorption band at 1710 $cm^{-1}$ based on a carbonyl group, and together with the following data of elementary analysis, formation of a poly-ion was confirmed:

Table 5
Results of Elementary Analyses

| Specimen | Analytical Composition (%) | | | |
|---|---|---|---|---|
| | C | H | O | N |
| Product | 49.5 | 8.1 | 25.9 | 16.4 |
| De-acetylated carboxy-methylchitin | 45.0 | 6.0 | 43.5 | 5.5 |
| Poly(ethyleneimine) | 55.4 | 11.1 | 0.0 | 33.5 |

The product showed a limiting viscosity of 9.9 at 20°C in an aqueous 0.1N sodium hydroxide soluton.

Example 17

By using the sodium salts of polystyrenesulfonic acid (molecular weight of $5 \times 10^5$), of polymethacrylic acid (molecular weight of $2 \times 10^5$), of polyethylenesulfonic acid (molecular weight of $4 \times 10^5$), of poly-L-glutamic acid (molecular weight of $1 \times 10^5$) and of sulfated polyvinyl alcohol (molecular weight of $3 \times 10^5$), respectively instead of the sodium salt of polyacrylic acid in Example 15, the same procedures as in Example 15 were carried out to produce the PC's shown in Table 6. The elementary analytical data of the products are also shown in Table 6.

All the products gave infrared absorption bands at 1510 $cm^{-1}$ based on $—NH_3^{\oplus}$, and the products from polystyrenesulfonic acid, polyethylenesulfonic acid, sulfated polyvinyl alcohol gave two infrared absorption bands at 1210 and 1040 $cm^{-1}$ based on $—SP_3^{\ominus}$. Furthermore, the products from poly-L-glutamic acid and polymethacrylic acid gave an infrared absorption band at 1710 $cm^{-1}$ based on carbonyl group. This data confirmed the formation of respective poly-ions.

Further, $5 \times 10^{-3}$ kg (5 g) of each of the PCs was dissolved in an aqueous 5% ammonia solution and the solution was cast onto a glass plate and dried at 40°C to obtain a film.

The pliability of each film depended on the ambient relative humidity. However, all could be used for practical purposes at the relative humidity of 40 to 70%.

Example 18

By using the hydrochlorides of poly-L-lysine, polyvinylpyridine, polyvinylbenzyltrimethylammonium an polydiallyldimethylammonium instead of the water-soluble synthetic polymer of polyethyleneimine in Example 16, and following the procedures shown in Example 16, PCs were produced under the conditions shown in Table 7. All of the products showed an infrared absorption band at 1710 $cm^{-1}$ based on a carbonyl group, which supports the formation of a PC. The results are summarized in Table 7.

TABLE 6
Syntheses of PC

Conditions in common:

Derivative of chitin: deacetylated carboxymethylchitin of a degree of carboxymethylation of 0.4 and a degree of deacetylation of 1.0

Concentration of the derivation of chitin: $2 \times 10^{-2}$ Kg (20 g) in $10^{-3} m^3$ (one liter) of an aqueous 1% acetic acid solution

| aqueous solution-soluble synthetic polymer (sodium salt) | Concentration of the polymer -$kg/m^3$ (g/10 l) of water | Yield of PC kg (g) | Elementary analytical data of PC | | | | |
|---|---|---|---|---|---|---|---|
| | | | C | H | O | N | S |
| Polystyrenesulfonic acid | 2.0 (20) | $2.8 \times 10^{-3}$ (28) | 47.5 | 5.8 | 33.5 | 4.9 | 8.3 |
| Polyethylenesulfonic acid | 1.3 (13) | $2.35 \times 10^{-2}$ (23.5) | 31.0 | 4.9 | 43.0 | 3.3 | 17.8 |
| Poly-L-glutamic acid | 1.6 (16) | $2.5 \times 10^{-2}$ (25) | 45.6 | 5.8 | 39.1 | 9.5 | 0.0 |
| Polymethacrylic acid | 1.0 (10) | $2.2 \times 10^{-2}$ (22) | 51.2 | 6.8 | 39.1 | 3.0 | 0.0 |
| Sulfated polyvinyl alcohol | 2.0 (20) | $3.0 \times 10^{-2}$ (30) | 35.3 | 4.0 | 45.5 | 3.5 | 11.7 |

Table 7
Syntheses of PC

Conditions in common:

Derivative of chitin (sodium salt): deacetylated carboxymethylchitin of a degree of carboxymethylation of 1.0 and a degree of deacetylation of 0.3

Concentration of the derivative of chitin: $2.8 \times 10^{-2}$ Kg (28 g) in $10^{-3}m^3$ (one liter) of water

| aqueous solution-soluble synthetic polymer (hydrochloride) | Concentration of the polymer -kg/$m^3$ (g/5 l) of water | Yield of PC kg (g) | Elementary analytical data of PC | | | |
|---|---|---|---|---|---|---|
| | | | C | H | O | N |
| Poly-L-lysine | 3.4 (17) | $2.5 \times 10^{-2}$ (25) | 51.0 | 7.2 | 28.0 | 13.8 |
| Polyvinylpyridine | 2.8 (14) | $2.3 \times 10^{-2}$ (23) | 62.7 | 6.2 | 21.6 | 9.5 |
| Polyvinylbenzyltrimethylammonium | 4.0 (20) | $2.95 \times 10^{-2}$ (29.5) | 63.5 | 9.4 | 20.1 | 7.0 |
| Polydiallyldimethylammonium | 3.0 (15) | $2.6 \times 10^{-2}$ (26) | 64.3 | 10.2 | 16.6 | 8.9 |

**Claims**

1. A poly-ion complex comprising a carboxymethyl N-acylchitosan having a degree of carboxymethylation of from 0.1 to 1 per pyranose unit or a de-N-acylated carboxymethyl N-acylchitosan having a degree of carboxymethylation of from 0.1 to 1 per pyranose unit and a degree of de-N-acylation of from 0.1 to 1 per pyranose unit; and a polyelectrolyte.

2. A complex according to claim 1, wherein the carboxymethyl N-acylchitosan has a degree of carboxymethylation of from 0.3 to 1 per pyranose unit.

3. A complex according to any one of the preceding claims, wherein the polyelectrolyte is a water-soluble chitosan, glycol-chitosan, O—1,2-dihydroxypropylchitosan or N-methylglycol-chitosan.

4. A complex according to claim 1 or 2, wherein the polyelectrolyte is a water-soluble sulfated compound selected from O-sulphated chitin, N-sulfated chitosan, N-sulfated glycol-chitosan, O- and N-sulfated chitosan, and O- and N-sulfated glycol-chitosan.

5. A complex according to claim 1 or 2, wherein the polyelectrolyte is dextran sulfate, chondroitin sulfate or heparin.

6. A complex according to claim 1 or 2, wherein the polyelectrolyte is a water-soluble polymer selected from polystyrenesulfonate, polyethylene-sulfonate, partially sulfated polyvinyl alcohol, polyacrylate, polymethacrylate, poly-L-glutamate, poly-L-lysine, polyethyleneimine, polyvinylpyridine, polyvinylbenzyltrimethylammonium salt and polydiallyldimethlammonium salt.

7. A process for the preparation of a polyion complex as claimed in any one of the preceding claims, which process comprises combining a carboxymethyl N-acylchitosan having a degree of carboxymethylation of from 0.1 to 1 per pyranose unit or a de-N-acylated carboxymethyl N-acylchitosan having a degree of carboxymethylation of from 0.1 to 1 per pyranose unit and a degree of de-N-acylation of from 0.1 to 1 per pyranose unit, or a salt thereof, with a polyelectrolyte in an aqueous solution.

8. Shaped articles prepared from a polyion complex as claimed in any one of claims 1 to 6 or which has been prepared by a process as claimed in claim 7.

**Revendications**

1. Complexe polyionique, caractérisé en ce qu'il comprend un carboxyméthyle N-acylchitosane ayant un degré de carboxyméthylation de 0,1 à 1 par motif pyranose ou un carboxyméthyle N-acylchitosane dé-N-acylé ayant un degré de carboxyméthylation de 0,1 à 1 par motif pyranose et un degré de dé-N-acylation de 0,1 à 1 par motif pyranose; et un polyélectrolyte.

2. Complexe suivant la revendication 1, caractérisé en ce que le carboxyméthyle N-acylchitosane a un degré de carboxyméthylation de 0,3 à 1 par motif pyranose.

3. Complexe suivant l'une quelconque des revendications précédentes, caractérisé en ce que le polyélectrolyte est un glycol-chitosane, un O—1,2-dihydroxy-propylchitosane ou un N-méthylglycol-chitosane ou un chitosane soluble dans l'eau.

4. Composé suivant l'une des revendications 1 et 2, caractérisé en ce que le polyélectrolyte est un composé sulfaté soluble dans l'eau choisi dans le groupe constitué par la chitine O-sulfatée, le chitosane N-sulfaté, le glycolchitosane N-sulfaté, le chitosane O- et N-sulfaté, et le glycol-chitosane O- et N-sulfaté.

5. Complexe suivant l'une quelconque des revendications 1 et 2, caractérisé en ce que le polyélectrolyte est un sulfate de dextrane, un sulfate de chondroitine, ou l'héparine.

6. Complexe suivant l'une quelconque des revendications 1 ou 2, caractérisé en ce que le polyélectrolyte est un polymère soluble dans l'eau choisi dans le groupe constitué par le polystyrènesulfonate, polyéthylène-sulfonate, l'alcool polyvinylique partiellement sulfaté, le polyacrylate, le polyméthacrylate, le poly-L-glutamate, la poly-L-lysine, la polyéthylèneimine, la polyvinylpyridine, le sel de polyvinylbenzyltriméthylammonium et le sel de polydiallyldiméthyl-ammonium.

7. Procédé de préparation d'un complexe polyionique tel que revendiqué dans l'une quelconque des revendications précédentes, procédé consistant à combiner un carboxyméthyle N-acylchitosane ayant un degré de carboxyméthylation de 0,1 à 1 par motif pyranose, ou un carboxyméthyle N-acylchitosane dé-N-acylé et ayant un degré de carboxyméthylation de 0,1 à 1 par motif pyranose et un degré de dé-N-acylation de 0,1 à 1 par motif pyranose ou un sel de ceux-ci avec un polyélectrolyte dans une solution aqueuse.

8. Article formé préparé à partir d'un complexe polyionique tel que revendiqué dans l'une quelconque des revendications 1 à 6 ou ayant été préparé par un procédé tel que revendiqué dans la revendication 7.

**Patentansprüche**

1. Polyionkomplex, enthaltend ein Carboxymethyl-N-acylchitosan mit einem Carboxymethylierungsgrad von 0,1 bis 1 pro Pyranose-Einheit oder ein de-N-acyliertes Carboxymethyl-N-acylchitosan

mit einem Carboxymethylierungsgrad von 0,1 bis 1 pro Pyranose-Einheit und einem de-N-Acylierungsgrad von 0,1 bis 1 pro Pyranose-Einheit, und einen Polyelektrolyten.

2. Komplex nach Anspruch 1, worin das Carboxymethyl-N-acylchitosan einen Carboxymethylierungsgrad von 0,3 bis 1 pro Pyranose-Einheit aufweist.

3. Komplex nach einem der voranstehenden Ansprüche, worin der Polyelektrolyt ein wasserlösliches Chitosan, Glykolchitosan, O—1,2-Dihydroxypropylchitosan oder N-Methylglykolchitosan ist.

4. Komplex nach Anspruch 1 oder 2, worin der Polyelektrolyt eine wasserlösliche sulfatierte Verbindung, ausgewählt unter O-sulfatiertem Chitin, N-sulfatiertem Chitosan, N-sulfatiertem Glykolchitosan, O- und N-sulfatiertem Chitosan, und O- und N-sulfatiertem Glykolchitosan ist.

5. Komplex nach Anspruch 1 oder 2, worin der Polyelektrolyt Dextransulfat, Chondroitinsulfat oder Heparin ist.

6. Komplex nach Anspruch 1 oder 2, worin der Polyelektrolyt ein wasserlösliches Polymer ist, ausgewählt unter Polystyrolsulfonat, Polyethylensulfonat, teilweise sulfatiertem Polyvinylalkohol, Polyacrylat, Polymethacrylat, Poly-L-glutamat, Poly-L-lysin, Polyethylenimin, Polyvinylpyridin, Polyvinylbenzyl-trimethylammoniumsalz und Polydiallyldimethyl-ammoniumsalz.

7. Verfahren zur Herstellung eines Polyionkomplexes nach einem der voranstehenden Ansprüche, wobei ein Carboxymethyl-N-acylchitosan mit einem Carboxymethylierungsgrad von 0,1 bis 1 pro Pyranose-Einheit oder ein de-N-acyliertes Carboxymethyl-N-acylchitosan mit einem Carboxymethylierungsgrad von 0,1 bis 1 pro Pyranose-Einheit und einem de-N-Acylierungsgrad von 0,1 bis 1 pro Pyranose-Einheit, oder ein Salz davon, mit einem Polyelektrolyten in einer wäßrigen Lösung kombiniert wird.

8. Formgegenstände, hergestellt aus einem Polyionkomplex nach einem der Ansprüche 1 bis 6 oder hergestellt nach einem Verfahren gemäß Anspruch 7.